# FASCICULE DE BREVET EUROPEEN

(11) **EP 2 266 263 B1**
(45) Date de publication et mention de la délivrance du brevet: **17.08.2011**
(21) Numéro de dépôt: 09719586.1
(22) Date de dépôt: 25.02.2009
(51) Int. Cl.: H04L 12/56

(54) **Procédé de gestion de flux de données sur un réseau de communications**
Verfahren zur Verwaltung von Datenströmen in einem Kommunikationsnetz
Method of managing data streams on a communications network

(30) Priorité: 03.03.2008 FR 0801153
(43) Date de publication de la demande: 29.12.2010
(73) Titulaire: NEXTER Systems, 42328 Roanne Cedex (FR)
(72) Inventeur: MIOTTI, Luc, F-78960 Voisins-Le-Bretonneux (FR)
(74) Mandataire: Célanie, Christian
(86) Numéro de dépôt international: PCT/FR2009/000198
(87) Numéro de publication internationale: WO 2009/112720

(56) Documents cités:
- WO-A-2006/092645
- US-A- 5 881 050
- US-A1- 2003 152 029
- US-B1- 7 116 682
- COHEN C J ET AL: "Information Sharing on a Massive Scale" 23RD ARMY SCIENCE CONFERENCE, 2 décembre 2002 (2002-12-02), - 5 décembre 2002 (2002-12-05) pages 1-2, XP002501610 Renaissance Orlando Ressort, Orlando, FL, US

## Description

Le domaine technique de l'invention est celui des procédés et dispositifs permettant de gérer les flux de données sur un réseau de communications.

Les réseaux de communications permettent de relier plusieurs utilisateurs et différentes sources de données (caméras, capteurs).

Les réseaux de communications, notamment les BUS de transmission de données (par exemple les BUS Ethernet) sont susceptibles de se trouver engorgés lorsque les utilisateurs se multiplient et demandent simultanément l'accès à des volumes de données importants.

Il en est ainsi notamment lorsque les BUS transmettent des données vidéo fournies par des caméras. WO 2006/092645 A décrit un procédé de gestion de flux de données sur un réseau de communications.

Lorsqu'un utilisateur du réseau demande l'accès à de nouvelles sources (ce que l'on appellera une nouvelle demande de service), la solution habituelle pour éviter l'engorgement consiste à vérifier les capacités du réseau à véhiculer ce nouveau flux de données. Si le nouveau flux est acceptable l'accès est autorisé, sinon il est interdit.

Or il est possible que les flux existant ne soient pas tous exploités ou bien qu'ils ne soient exploités que partiellement du fait par exemple de la multiplicité des flux arrivant sur un utilisateur donné (qui ne peut concrètement n'en exploiter qu'une partie).

Par ailleurs, la qualité des flux véhiculés (par exemple du fait de la résolution des images fournies par les caméras) peut être très variable (et correspondre à un flux relativement volumineux) et elle peut ne pas correspondre au besoin réel de l'utilisateur.

L'invention a pour but de proposer un procédé qui permet de gérer le flux de données sur un réseau, procédé qui permet d'optimiser les ressources afin d'autoriser les nouvelles demandes d'accès ou de service sans avoir systématiquement recours à la suppression de services existant.

Le procédé selon l'invention permet également de gérer automatiquement les possibilités du réseau en mettant en oeuvre des critères objectifs pour le choix des priorités.

Ainsi, l'invention a pour objet un procédé de gestion de flux de données sur un réseau de communications, réseau comportant au moins un utilisateur Uᵢ et au moins une source de données Si, procédé dans lequel on affecte à chaque utilisateur un ou plusieurs service Wᵢ, chaque service étant constitué par l'association d'une source de données Si avec une caractéristique Qᵢ de la qualité de transmission des données émises par cette source vers cet utilisateur et dans lequel on gère dynamiquement les droits d'accès au réseau en diminuant la qualité de transmission des données d'au moins un service en cours et/ou en suspendant ou arrêtant la transmission des données d'au moins un service en cours pour pouvoir incorporer un nouvel utilisateur Uᵢ ou un nouveau service Wᵢ, caractérisé en ce que, lorsqu'il n'est pas possible de dégrader suffisamment les services en cours pour incorporer un nouveau service, on transmet à au moins un utilisateur Uᵢ concerné une demande de confirmation d'usage de son ou de ses services en cours Wᵢ, puis on suspend ou stoppe le ou les services pour lesquels aucune réponse positive n'a été donnée à l'issue d'une période donnée.

La demande de confirmation d'usage pourra être transmise par incrustation vidéo ou bien par voie audio.

Selon une autre variante de réalisation, lorsque les caractéristiques de flux du réseau redeviennent favorables, le ou les services suspendus sont remis en service.

Avantageusement, on pourra associer à chaque utilisateur un index qui donnera le nombre de fois qu'il a été interrogé depuis la mise en service du réseau, et on interrogera alors les utilisateurs susceptibles d'être suspendus en suivant les valeurs d'index croissantes.

Chaque utilisateur dont le service a été interrompu ou suspendu pourra avoir la possibilité d'annuler l'opération de suspension pour remettre le réseau dans l'état antérieur.

On pourra associer à chaque service un critère de priorité qui sera fonction de la mission à effectuer, et au moins un service non prioritaire pourra être résilié pour permettre l'ajout d'un service prioritaire.

Un dispositif pour la mise en oeuvre du procédé assure la gestion de flux de données sur un réseau de communication, réseau comportant au moins un utilisateur Uᵢ et au moins une source de données Si. Il est caractérisé en ce que le réseau incorpore un moyen gestionnaire des ressources qui est un moyen de calcul gérant les services de chaque utilisateur, c'est à dire l'association pour cet utilisateur d'une source de données avec une caractéristique de la qualité de transmission des données émises par cette source vers cet utilisateur, le moyen gestionnaire pouvant par ailleurs commander une source afin de diminuer la qualité de transmission de ses données vers un utilisateur et/ou de suspendre ou arrêter cette transmission et pouvant également connecter ou déconnecter un nouvel utilisateur sur le réseau en fonction de critères de choix.

L'invention sera mieux comprise à la lecture de la description qui va suivre de modes particuliers de réalisation, description faite en référence aux dessins annexés et dans lesquels :
- la figure 1 est un schéma général d'un dispositif mettant en oeuvre le procédé selon l'invention,
- la figure 2 est un logigramme montrant les différentes étapes du procédé selon un mode de réalisation de l'invention,
- la figure 3 est un logigramme montrant les différentes étapes du procédé selon un autre mode de réalisation de l'invention,
- les figures 4 et 5 sont des logigrammes montrant deux variantes du procédé selon l'invention.

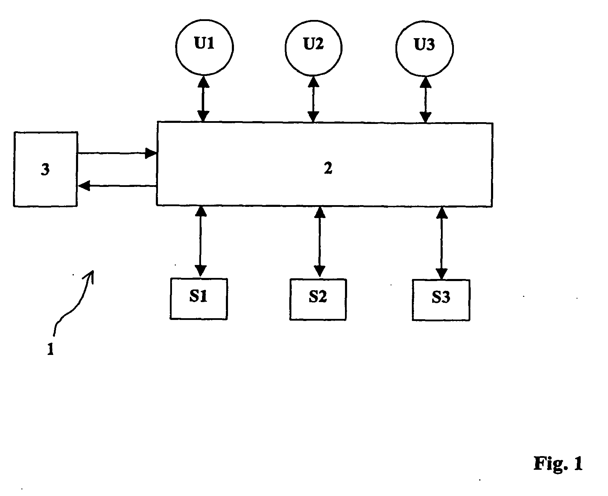

En se reportant à la figure 1, un dispositif 1 de gestion de flux de données selon le procédé de l'invention est associé à un réseau de communication qui comporte différents utilisateurs Uᵢ (ici trois utilisateurs U1, U2 et U3) et plusieurs sources de données Si (ici trois sources S1, S2 et S3).

Le réseau sera par exemple un réseau interne à un véhicule militaire. Les utilisateurs seront l'équipage du véhicule (commandant, pilote, responsable du tir). Les sources seront des caméras d'observation de l'extérieur du véhicule (caméras visibles, infrarouge, télémètres, viseurs de tir) ou bien des sources audio (radio de bord) ou encore des capteurs (détecteur de menace, centrale inertielle...).

Le réseau comprend un commutateur 2 qui reçoit les signaux émis par les différentes sources et qui les redistribue vers les utilisateurs.

Conformément à l'invention le dispositif 1 comporte un moyen 3 qui permet la gestion des ressources. Ce moyen 3 est un moyen de calcul qui permet de gérer les différents services associés à chaque utilisateur Uᵢ.

Selon l'invention on entend par service Wᵢ le triplet associant (Uᵢ, Sᵢ, Qᵢ). Ainsi un service Wᵢ correspond à la réception par un utilisateur Uᵢ des données de la source Si avec une qualité de transmission Qᵢ.

La qualité de transmission est définie par le débit de transmission. Ceci peut s'exprimer en nombre de données élémentaires transmises par unité de temps (par exemple Méga bits par seconde ou Méga octets par seconde).

Conformément à l'invention, la qualité ne sera pas fixée à une valeur standard pour tous les utilisateurs mais elle dépendra des besoins exprimés par ces derniers ainsi que des capacités du réseau à un instant donné (ce que ne connaît généralement pas un utilisateur).

Ainsi, le dispositif cherchera systématiquement à fournir à chaque utilisateur les données requises et avec le juste niveau de qualité nécessaire tel qu'il aura été exprimé par cet utilisateur.

Pour cela, le moyen 3 de gestion des ressources pourra commander les sources Si afin de diminuer la qualité de transmission de leurs données vers un utilisateur Uᵢ de façon à rendre ce service conforme à la demande. Il est en effet généralement possible au niveau des sources de données d'avoir plusieurs niveaux de qualité qui sont émis en simultané sur un réseau. Les sources Si peuvent ainsi générer un flux avec une compression plus importante et/ou une réduction de la résolution plus importante et/ou une réduction de la fréquence de transmission etc...

Généralement, les utilisateurs sur un réseau choisissent le niveau de qualité qu'ils souhaitent obtenir de la source. Avec le procédé selon l'invention, c'est le moyen 3 de gestion des ressources qui choisit lui-même d'attribuer à l'utilisateur Ui le niveau de qualité qui lui est strictement nécessaire compte tenu de ses besoins exprimés et des capacités du réseau.

Le procédé peut donc associer à un utilisateur (moyennant une requête qu'il adresse à la source considérée via le commutateur) un niveau de qualité inférieur à la demande de l'utilisateur.

Par ailleurs, le moyen gestionnaire 3 sera conçu de façon à pouvoir connecter ou déconnecter un utilisateur Uᵢ sur le réseau en fonction de critères de choix. Cette connexion ou déconnexion est réalisée en envoyant les commandes appropriées au commutateur 2.

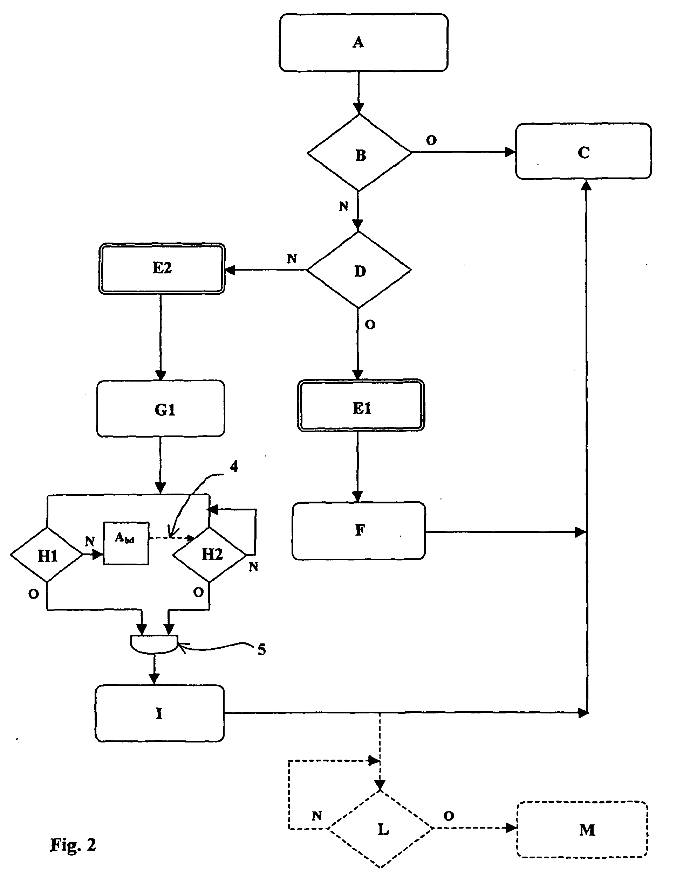

La figure 2 permet de préciser le procédé mis en oeuvre par l'invention.

L'étape A correspond à l'expression par un utilisateur Uᵢ d'une demande de service Wᵢ. Il peut s'agir d'un nouvel utilisateur Uᵢ qui se connecte au réseau et qui souhaite avoir accès à une source Si. Il peut aussi s'agir d'un utilisateur Uᵢ déjà connecté mais qui souhaite avoir accès à une source supplémentaire Sᵢ.

La demande de service par l'utilisateur Uᵢ sera accompagnée de l'expression d'un niveau de qualité minimale pour ce service Qᵢ. Le calculateur 3 va alors enregistrer cette demande de service Wᵢ (Uᵢ, Sᵢ, Qᵢ).

L'expression par un utilisateur d'un niveau de qualité sera interprétée comme une demande impérative : si cette qualité n'est pas accessible, il est inutile de transmettre le flux de données. Le réseau pourra par contre fournir une qualité supérieure à la qualité minimale requise si ses capacités et le trafic en cours le permettent.

L'utilisateur transmet par ailleurs d'une façon automatique ses coordonnées (adresse machine de son interface d'accessibilité au réseau). Lors de la demande de service le demandeur précise aussi si le service sera utilisé par un utilisateur humain ou bien par une machine (par exemple un enregistreur).

Le test B qui est conduit par le moyen de calcul 3 est une vérification de l'acceptabilité de ce nouveau service Wᵢ par le réseau. Le moyen 3 connaît les caractéristiques techniques du réseau et sait par ailleurs quel est le trafic en cours sur le réseau. Il conserve en effet en mémoire toutes les caractéristiques des services Wᵢ qui sont en cours.

Si le test B est positif, c'est à dire si le réseau peut accepter le nouveau service, l'étape C est commandée, c'est à dire l'ouverture du nouveau service Wᵢ.

Si le test B est négatif, le moyen de calcul 3 conduit le test D qui est une vérification de la possibilité de dégrader au moins un service. Il compare pour cela, au niveau de chaque service Wᵢ en cours, la qualité effectivement transmise avec la qualité minimale Qᵢ qui était requise par l'utilisateur considéré lors de sa demande.

S'il est possible d'accepter le nouveau service en dégradant la qualité de un ou plusieurs des services en cours (en restant cependant toujours au moins au niveau des qualités minimales Qᵢ requises) le moyen 3 va tout d'abord choisir (étape E1) le ou les services qui seront dégradés puis commander cette ou ces dégradations de service (étape F). Le choix de l'étape E1 sera fait suivant différents critères qui seront explicités par la suite.

L'étape F est alors suivie de l'étape C qui est l'ouverture du nouveau service Wᵢ. On voit donc que grâce à l'invention il devient possible dans une certaine mesure d'accepter de nouveaux services sur un réseau a priori saturé en ayant recours à une dégradation (dans une limite acceptable) des services des autres utilisateurs.

Si le résultat du test D est négatif, c'est à dire si les contraintes de surcharge du réseau sont telles qu'il n'est pas possible de dégrader les services en cours pour laisser la place à un nouveau service, le procédé selon l'invention va rechercher quels services il est possible d'interrompre ou de suspendre.

Au cours de l'étape E2, le moyen 3 va conduire le choix des services en cours à interrompre ou suspendre, choix qui est conduit suivant des critères qui seront explicités par la suite. Ce choix concrètement comprendra une liste ordonnée des services à interroger et pouvant donc être potentiellement interrompus ou suspendus.

Au cours de l'étape G1, le moyen 3 envoie des messages (audio ou vidéo) à destination du ou des utilisateurs humains qui mettent en oeuvre les services sélectionnés à l'étape E2.

Ces messages demanderont la confirmation de l'exploitation humaine du flux reçu. Le moyen gestionnaire de ressources 3 va alors procéder à deux tests H1 et H2 en parallèle sur le ou les utilisateurs du ou des services sélectionnés. Un premier test H1 est un test de vérification de la réponse de l'utilisateur considéré : la réponse O (Oui) correspond à l'acceptation par l'utilisateur d'abandonner le service, la réponse N (non) signifie que l'utilisateur ne veut pas abandonner le service.

D'un point de vue pratique, la demande de confirmation pourra être transmise à l'aide d'une interface homme-machine vidéo, par exemple au moyen d'un écran sur lequel apparaîtra un message de demande de confirmation. L'écran pourra être alors un écran tactile et la confirmation sera par exemple donnée en touchant une zone de l'écran. La demande de confirmation pourra être également transmise sous la forme d'un message audio. La confirmation pourra alors être donnée par la prononciation par l'utilisateur d'un mot ou d'un message convenu.

Lorsque l'utilisateur accepte l'abandon de service, l'étape I est commandée : l'arrêt du service (ou la suspension du service).

Inversement, lorsque l'utilisateur ne veut pas abandonner le service (réponse N) le moyen 3 n'intervient pas sur le service considéré. Le processus est abandonné (pavé Abd) pour le service considéré et le deuxième test H2 est également interrompu (flèche 4).

Le deuxième test H2 est couplé à une horloge (non représentée) interne au moyen 3. Il compare le temps qui s'est écoulé depuis l'étape G (interrogation de l'utilisateur considéré) avec une valeur maximale Tmax mise en mémoire dans le moyen 3 (Tmax de l'ordre de quelques secondes). Ce test est interrompu lorsque l'utilisateur répond (positivement ou négativement au test H1).

Lorsque l'utilisateur ne répond pas au test H1 et que le test H2 est positif, l'étape I est engagée. Le moyen 3 commande donc l'arrêt du service (ou la suspension du service).

On a représenté (repère 5) sur la figure 2 une porte OU qui reçoit les résultats des tests H1 et H2. Une réponse positive à l'un ou l'autre test (Hl, H2) conduit donc à un arrêt ou une suspension du service considéré.

Un service est donc arrêté ou suspendu lorsque l'utilisateur considéré est d'accord avec cette décision ou lorsqu'il ne répond pas dans le délai Tmax prévu.

Lorsque l'utilisateur ne veut pas abandonner le service (réponse N) on a vu que le moyen 3 n'intervenait pas sur le service considéré et que le processus était abandonné (pavé Abd) pour ce service considéré.

Le moyen gestionnaire 3 pourra cependant continuer à interroger les autres services suivant l'ordre des choix qui a été déterminé à l'étape E2 (les autres tests ne sont pas représentés sur la figure 2).

On voit sur la figure 2 que l'étape I est suivie de l'étape C, c'est à dire l'acceptation du nouveau service demandé. En effet, ce dernier devient acceptable comme suite à l'abandon ou à la suspension d'un ou plusieurs services non utilisés.

On a vu que l'étape I était une étape au cours de laquelle le ou les services non utilisés étaient interrompus automatiquement ou suspendus.

Suivant un premier mode de réalisation, c'est une interruption du service qui est effectivement commandée. L'utilisateur concerné doit donc demander le rétablissement du service pour pouvoir le récupérer (étape A).

A défaut d'une telle demande, il n'y a aucune modification du réseau.

Suivant un autre mode de réalisation, l'étape I correspond à une suspension du ou des services non utilisés. Ces services sont donc susceptibles d'être automatiquement rétablis par le moyen de gestion 3. Cette variante sera décrite en référence à la figure 2.

On a représenté sur la figure 2 en pointillés une autre variante de réalisation dans laquelle un test L est conduit par le moyen gestionnaire 3. Ce test correspond à la vérification de l'envoi ou non par l'utilisateur qui vient d'être interrompu ou suspendu d'une commande d'annulation.

Il est possible en effet que l'interruption ou la suspension qui a été provoquée perturbe une opération importante. Ceci peut intervenir lorsque l'opérateur n'a pas eu le temps de réagir au message envoyé dans le délai requis.

Dans le cas d'un service vidéo, une commande d'annulation pourra par exemple être envoyée à l'aide d'un écran tactile. L'utilisateur touchant la zone de l'écran sur laquelle se trouve le message l'informant de l'arrêt de son service.

Dans le cas d'un service audio, une commande d'annulation pourra par exemple être envoyée à l'aide d'un microphone. L'utilisateur prononcera dans le microphone un message demandant l'annulation de l'interruption de service. L'information selon laquelle le service va être arrêté pourra lui être transmise par voie audio.

Si la commande d'annulation est reçue, le moyen gestionnaire 3 rétablit (étape M) la situation antérieure. Le nouveau service qui venait d'être admis se trouve donc interrompu (et l'utilisateur associé en est informé).

On pourra avantageusement prévoir au niveau des interfaces permettant la demande d'accès A à un service la possibilité pour un utilisateur de refuser l'accès au réseau si le service demandé est susceptible d'être ainsi interrompu. Ceci intervient si les conditions d'encombrement du réseau sont telles que le moyen gestionnaire sait qu'une nouvelle demande de service pourrait conduire à une interruption d'un autre service (résultat du test B négatif).

On a noté précédemment que les étapes E1 et E2 étaient des étapes de choix des services à dégrader (étape E1) ou à interrompre ou suspendre (étape E2).

Différents critères de choix sont possibles pour ces étapes.

On a vu que le moyen gestionnaire 3 mémorisait systématiquement les différents services en cours (et suspendus) avec leurs caractéristiques associées : Utilisateur Uᵢ, Source utilisée Si et qualité minimale requise Qᵢ.

On pourra également mettre en place au niveau du moyen gestionnaire 3 un index qui mémorisera pour chaque utilisateur Uᵢ le nombre de fois Ni qu'il a été interrogé depuis la mise en service du réseau.

On interrogera alors lors de l'étape G1 d'une façon préférée les utilisateurs susceptibles d'être suspendus et ayant été peu interrogés depuis la mise en service du réseau.

Il suffira donc au niveau de l'étape de choix E2 de retenir les utilisateurs en suivant les valeurs d'index Ni croissantes.

On est ainsi assuré de ne pas solliciter systématiquement les mêmes utilisateurs.

Ce même test peut être mis en oeuvre pour l'étape de choix E1. Si deux utilisateurs peuvent voir indifféremment leurs services dégradés, on préférera dégrader le service de l'utilisateur ayant été le moins sollicité auparavant.

Lorsqu'il n'est pas possible de dégrader suffisamment les services en cours pour incorporer un nouveau service, on transmet à au moins un utilisateur Uᵢ concerné une demande de confirmation d'usage de son ou de ses services en cours Wᵢ, puis on suspend ou stoppe le ou les services pour lesquels aucune réponse positive n'a été donnée à l'issue d'une période donnée.

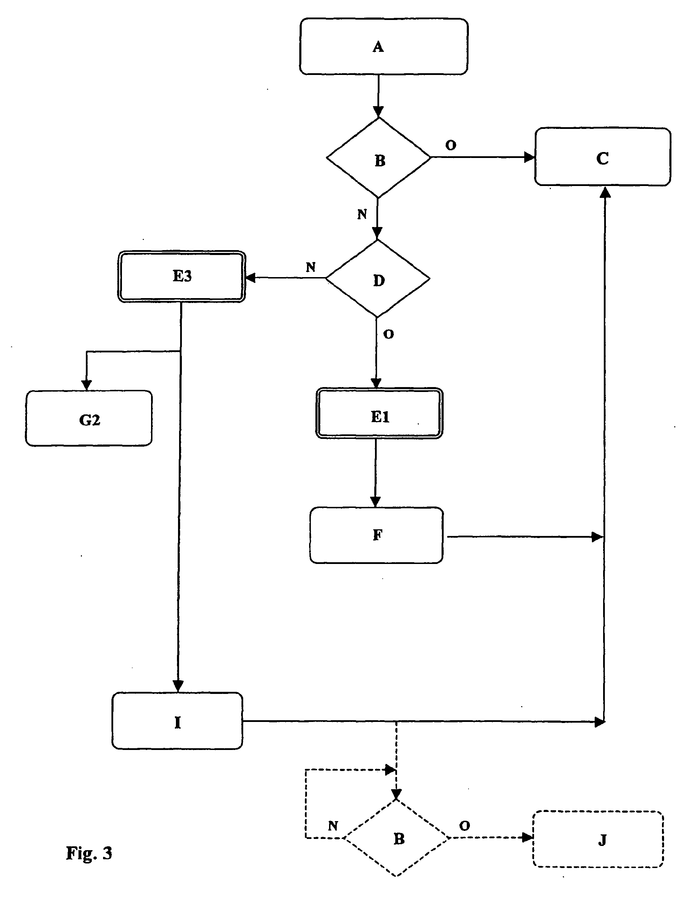

La figure 3 montre un autre mode de réalisation de l'invention dans lequel on remplace la succession des étapes E2,G1,H1,H2,I par celle des étapes E3 et I.

Dans cette variante en effet, lorsqu'il est nécessaire d'interrompre ou de suspendre des services, on n'a pas recours à l'interrogation des utilisateurs mais on procède au choix délibéré des services qui seront interrompus ou suspendus.

Ainsi au cours de l'étape E3, on va choisir les services à interrompre ou suspendre. Pour cela on a au préalable affecté à chaque service un critère de priorité K qui est fonction de la mission à effectuer.

Si le nouveau service demandé Wᵢ est affecté d'une priorité Kᵢ, on arrêtera systématiquement au moins un service Wⱼ qui est en cours et qui a une priorité Kⱼ qui est inférieure à Kᵢ (Kⱼ<Kᵢ).

Pour une application à un réseau interne à un véhicule militaire, on considèrera par exemple les services associés à la mobilité comme plus prioritaires que ceux associés au tir. Et on considèrera les services associés au tir comme plus prioritaires que les services associés à l'observation.

Parallèlement à l'interruption ou à la suspension du service le moyen gestionnaire 3 envoie (étape G2) un message (audio ou vidéo) à destination du ou des utilisateurs humains qui mettent en oeuvre les services sélectionnés à l'étape E3. Ce message informera l'utilisateur que cet arrêt ou suspension a été décidé pour raison de priorité d'un service entrant.

Bien entendu, comme dans le mode de réalisation précédent, lorsque les conditions de service redeviennent favorables, le moyen 3 pourra rétablir le service interrompu.

On a ainsi représenté en pointillés sur la figure 3 cette variante de réalisation de l'invention qui peut s'appliquer aussi bien avec le mode précédemment décrit qu'avec celui selon la figure 2.

Avec cette variante, un nouveau test B est conduit par le moyen de calcul 3 pour vérifier si le réseau peut accepter le rétablissement du ou des services qui ont été suspendus.

Pour conduire ce test, le moyen de calcul 3 conserve en mémoire les caractéristiques des services qui ont été suspendus. Lorsque les caractéristiques du réseau deviennent favorables (par exemple comme suite à l'arrêt d'un autre service par un utilisateur), le moyen 3 pourra vérifier la possibilité de rétablir un service suspendu et il commandera automatiquement ce rétablissement (étape J) comme suite à une évaluation positive faite par le test B.

On voit que l'invention permet de faciliter la mise en place automatique de nouveaux services sur un réseau en minimisant l'impact sur les services en cours.

Différentes variantes sont possibles sans sortir du cadre de l'invention.

On peut par exemple concevoir un dispositif dans lequel seules les étapes d'arrêt ou de suspension de services sont utilisées et les étapes de dégradation de service ne sont pas mises en oeuvre.

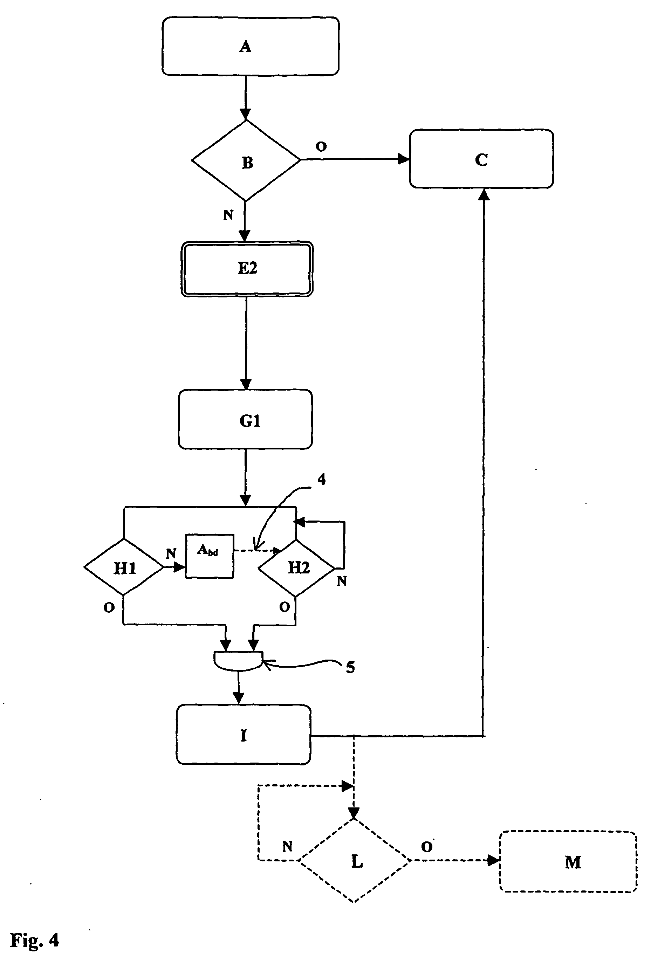

A titre d'exemple, la figure 4 montre une telle variante dérivée de la figure 2. Les étapes D, E1 et F ont été supprimées et l'étape de choix E2 intervient immédiatement en cas de réponse négative au test B sur la possibilité d'accepter un nouveau service.

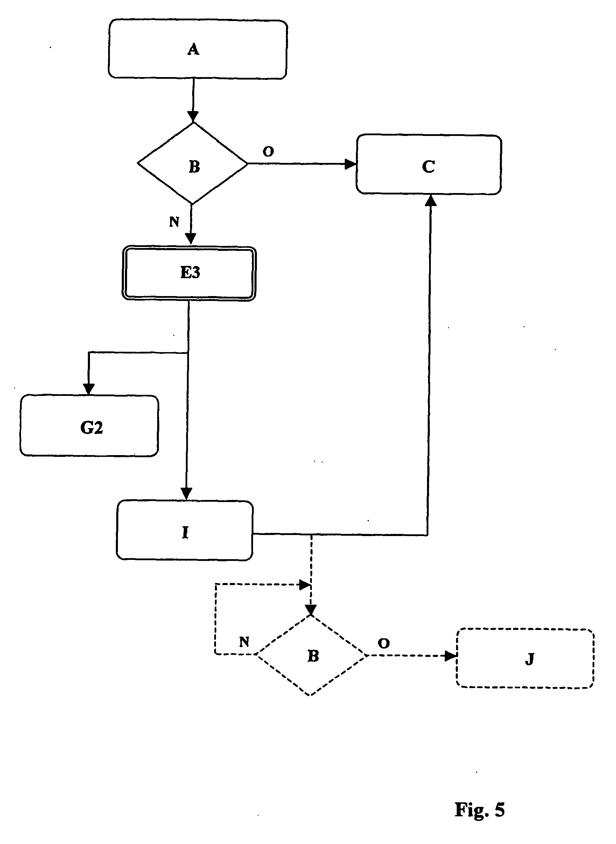

La figure 5 montre une autre variante dérivée de la figure 3. L'étape de choix E3 intervient alors immédiatement en cas de réponse négative au test B sur la possibilité d'accepter un nouveau service.

## Revendications

1. Procédé de gestion de flux de données sur un réseau de communications, réseau comportant au moins un utilisateur Uᵢ et au moins une source de données Sᵢ, procédé dans lequel on affecte à chaque utilisateur un ou plusieurs service Wᵢ, chaque service étant constitué par l'association d'une source de données Si avec une caractéristique Qᵢ de la qualité de transmission des données émises par cette source vers cet utilisateur et dans lequel on gère dynamiquement les droits d'accès au réseau en diminuant la qualité de transmission des données d'au moins un service en cours et/ou en suspendant ou arrêtant la transmission des données d'au moins un service en cours pour pouvoir incorporer un nouvel utilisateur Uᵢ ou un nouveau service Wᵢ, **caractérisé en ce que**, lorsqu'il n'est pas possible de dégrader suffisamment les services en cours pour incorporer un nouveau service, on transmet à au moins un utilisateur Uᵢ concerné une demande de confirmation d'usage de son ou de ses services en cours Wᵢ, puis on suspend ou stoppe le ou les services pour lesquels aucune réponse positive n'a été donnée à l'issue d'une période donnée.

2. Procédé de gestion de flux de données selon la revendication 1, **caractérisé en ce que** la demande de confirmation d'usage est transmise par incrustation vidéo.

3. Procédé de gestion de flux de données selon la revendication 1, **caractérisé en ce que** la demande de confirmation d'usage est transmise par voie audio.

4. Procédé de gestion de flux de données selon une des revendications 1 à 3, **caractérisé en ce que** lorsque les caractéristiques de flux du réseau redeviennent favorables le ou les services suspendus sont remis en service.

5. Procédé de gestion de flux de données selon une des revendications 1 à 4, **caractérisé en ce qu'**on associe à chaque utilisateur Uᵢ un index qui donne le nombre de fois qu'il a été interrogé depuis la mise en service du réseau, et **en ce qu'**on interroge les utilisateurs susceptibles d'être suspendus en suivant les valeurs d'index croissantes.

6. Procédé de gestion de flux de données selon une des revendications 1 à 5, **caractérisé en ce que** chaque utilisateur dont le service a été interrompu ou suspendu à la possibilité d'annuler l'opération de suspension pour remettre le réseau dans l'état antérieur.

7. Procédé de gestion de flux de données selon une des revendications 1 à 6, **caractérisé en ce qu'**on associe à chaque service un critère de priorité qui est fonction de la mission à effectuer, et **en ce qu'**au moins un service non prioritaire est résilié pour permettre l'ajout d'un service prioritaire.

## Claims

1. A process to manage data flow for a communications network, such network comprising at least one user Uᵢ and at least one data source Sᵢ, process in which one or several services Wᵢ is attributed to each user, each service being constituted by the association of a data source Si with a characteristic Qᵢ of the quality of transmission of the data emitted by this source to this user and in which access rights to the network are dynamically managed by reducing the quality of transmission of the data of at least one current service and/or by shutting down or suspending the data transmission of at least one service in progress to be able to incorporate a new user Uᵢ or a new service Wᵢ **characterised in that**, when it is not possible for the services in progress to be sufficiently deteriorated to allow a new service to be incorporated, a request for confirmation of the use of one or several of his services in progress Wᵢ is sent to at least one user Uᵢ, then the service(s) for which no positive reply has been given is suspended or shutdown after a given period of time has elapsed.

2. A data flow management process according to Claim 1, **characterised in that** the use confirmation request is sent by means of pop-up video widow.

3. A data flow management process according to Claim 1, wherein the use confirmation request is sent by audio means.

4. A data flow management process according to one of Claims 1 to 3, **characterised in that** when the flow characteristics become favourable once again, the suspended services are reactivated.

5. A data flow management process according to one of Claims 1 to 4, **characterised in that** an index is associated with each user that gives the number of times he has been solicited since the activation of the network, and in this case the users likely to be suspended may be consulted according to the index values in ascending order.

6. A data flow management process according to one of Claims 1 to 5, **characterised in that** each user whose service has been suspended or interrupted has the possibility of cancelling the suspension operation so as to return the network to its prior state.

7. A data flow management process according to one of Claims 1 to 6, **characterised in that** a priority criterion is associated with each service that depends on the task to be carried out, and wherein at least one non-priority service is cancelled to enable a priority service to be added.

## Patentansprüche

1. Verfahren zur Verwaltung von Datenfluss über ein Kommunikationsnetz, wobei das Netz wenigstens einen Anwender Uᵢ und wenigstens eine Datenquelle Sᵢ, umfasst, wobei bei dem Verfahren jedem Nutzer ein oder mehrere Dienste Wᵢ zugewiesen werden, wobei jeder Dienst von einer Zuordnung einer Datenquelle Sᵢ mit einem Merkmal Q₁ der Übertragungsqualität von Daten gebildet wird, welche von dieser Quelle zu diesem Benutzer ausgesendet werden, und bei dem die Zugriffsrechte auf das Netz dynamisch verwaltet werden, indem die Übertragungsqualität der Daten von wenigstens einem laufenden Dienst verringert und/oder die Übertragung der Daten von wenigstens einem laufenden Dienst ausgesetzt oder angehalten wird, um einen neuen Anwender Uᵢ oder einen neuen Dienst Wᵢ einbinden zu können, **dadurch gekennzeichnet, dass**, wenn es nicht möglich ist, die laufenden Dienste ausreichend abzubauen, um einen neuen Dienst einzubinden, an wenigstens einen betroffenen Anwender Uᵢ eine Anfrage zur Bestätigung der Nutzung seines oder seiner laufenden Dienste Wᵢ weitergeleitet wird und dann der oder die Dienste ausgesetzt oder angehalten werden, für die keine positive Antwort am Ende einer gegebenen Periode gegeben wurde.

2. Verfahren zur Verwaltung von Datenfluss nach Anspruch 1, **dadurch gekennzeichnet, dass** die Anfrage zur Bestätigung der Nutzung durch Video-Einblendung übertragen wird.

3. Verfahren zur Verwaltung von Datenfluss nach Anspruch 1, **dadurch gekennzeichnet, dass** die Anfrage zur Bestätigung der Nutzung auf akustischem Wege übertragen wird.

4. Verfahren zur Verwaltung von Datenfluss nach einem der Ansprüche 1 bis 3, **dadurch gekennzeichnet, dass**, wenn die Flussmerkmale des Netzes wieder günstig werden, werden der oder die ausgesetzten Dienste wieder in Betrieb genommen.

5. Verfahren zur Verwaltung von Datenfluss nach einem der Ansprüche 1 bis 4, **dadurch gekennzeichnet, dass** jedem Anwender Uᵢ ein Index zugeordnet wird, welcher die Anzahl der Male angibt, die er seit der Inbetriebnahme des Netzes abgefragt worden ist, und dass die Anwender, die dafür empfänglich sind, ausgesetzt zu werden, abgefragt werden, indem den steigenden Indexwerten gefolgt wird.

6. Verfahren zur Verwaltung von Datenfluss nach einem der Ansprüche 1 bis 5, **dadurch gekennzeichnet, dass** jeder Anwender, dessen Dienst unterbrochen oder ausgesetzt worden ist, die Möglichkeit hat, den Aussetzvorgang abzubrechen, um das Netz wieder in den vorherigen Zustand zu versetzen.

7. Verfahren zur Verwaltung von Datenfluss nach einem der Ansprüche 1 bis 6, **dadurch gekennzeichnet, dass** jedem Dienst ein Prioritätskriterium zugeordnet wird, welches von der zu erfüllenden Aufgabe abhängt, und dass wenigstens ein nicht vorrangiger Dienst aufgehoben wird, um die Hinzufügung eines vorrangigen Dienstes zu ermöglichen.
